# EUROPEAN PATENT APPLICATION

(11) **EP 3 428 211 A1**
(43) Date of publication of application: **16.01.2019**
(21) Application number: 18177543.8
(22) Date of filing: 13.06.2018
(51) Int. Cl.: C08G 18/48, C08G 18/73, C08G 18/79, C08G 18/10, C08G 18/12, C08G 18/28, C08G 18/72, C08G 18/76, C08G 18/78, C08G 18/80, C08G 18/83, C08G 18/66, C08G 18/32, C08G 18/50

(54) **USE OF POLYMERIZABLE ULTRAVIOLET ABSORBER IN POLYURETHANE AND COMPOSITION FOR PREPARING POLYURETHANE COMPRISING THE SAME**

(30) Priority: 12.07.2017 TW 106123388
(71) Applicant: Everlight Chemical Industrial Corporation, 106 Taipei City (TW)
(72) Inventor: CHANG, Kuang-Chin, 328 Taoyuan City (TW); LIN, Jui-Chi, 328 Taoyuan City (TW); WEI, Jiu-Tai, 328 Taoyuan City (TW); TSAI, Yu-Ming, 328 Taoyuan City (TW); KO, Tzu-Heng, 328 Taoyuan City (TW); CHOU, Der-Gun, 328 Taoyuan City (TW)
(74) Representative: van Dam, Vincent

(57) **Abstract**

A use of a polymerizable ultraviolet absorber is disclosed, which is applied to a polyurethane preparation. The polymerizable ultraviolet absorber is obtained by reacting an UV absorber having a reactive hydrogen group with a polyisocyanate having three -NCO groups. In addition, a composition for forming polyurethane comprising the aforementioned polymerizable ultraviolet absorber is also disclosed.

## Description

### CROSS REFERENCE TO RELATED APPLICATION

This application claims the benefits of the Taiwan Patent Application Serial Number 106123388, filed on July 12, 2017, the subject matter of which is incorporated herein by reference.

### BACKGROUND

### 1. Field

The present disclosure is related to a use of a polymerizable ultraviolet absorber and a composition for preparing polyurethane comprising the same, wherein the polymerizable ultraviolet absorber can solve the yellowing problem of the polyurethane, and have low migration.

### 2. Description of Related Art

Polyurethane itself has excellent physical properties, but it may be yellowed due to light or thermal effect, resulting in the properties thereof deteriorated. For example, the aromatic isocyanate (such as TDI, MDI and etc.) in the polyurethane may be degraded due to UV light irradiation for a long time, resulting in the bond breaking; and then, the coloring material with irradiation groups may be generated, resulting in the polyurethane yellowed.

To solve the yellowing problem of polyurethane, small molecular ultraviolet absorbers are added into the polyurethane. However, the small molecular ultraviolet absorbers may be migrated when they are in high temperature condition or organic solvent (oil phase), which may cause the small molecular ultraviolet absorbers dissolved and lost.

Therefore, it is desirable to provide an ultraviolet absorber, which can solve the yellowing problem of the polyurethane and has low migration; thus, the ultraviolet absorber may not be lost due to dissolution and the time that the polyurethane turned into yellow can be extended.

### SUMMARY

An object of the present disclosure is to provide a use of a polymerizable ultraviolet absorber and a composition for preparing polyurethane comprising the same. The polymerizable ultraviolet absorber provided by the present disclosure can be used in a process for preparing polyurethane to solve the yellowing problem of the polyurethane.

The present disclosure provides a use of a polymerizable ultraviolet absorber, which is applied to a process for preparing polyurethane, wherein the polymerizable ultraviolet absorber is obtained by reacting an UV absorber having a reactive hydrogen group with a polyisocyanate having three -NCO groups.

In one aspect of the present disclosure, the polymerizable ultraviolet absorber can be further obtained by reacting the UV absorber having the reactive hydrogen group with the polyisocyanate having the three -NCO groups and a diol or a polyol.

Hence, the polymerizable ultraviolet absorber of the present disclosure can be represented by the following formula (I): 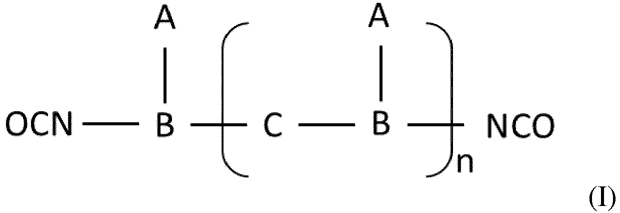
wherein, A is derived from an UV absorber having a reactive hydrogen group;
B is derived from a polyisocyanate having three -NCO groups;
C is derived from a diol or a polyol; and
n is an integer from 0 to 3.

When n in the formula (I) is 0, the polymerizable ultraviolet absorber can be obtained by reacting an UV absorber having a reactive hydrogen group with a polyisocyanate having three -NCO groups, wherein the reactive hydrogen group reacts with one of the three -NCO groups comprised in the polyisocyanate. When n in the formula (I) is 1, the polymerizable ultraviolet absorber can be obtained by reacting an UV absorber having a reactive hydrogen group with a polyisocyanate having three -NCO groups and a diol or polyol, wherein the reactive hydrogen group reacts with one of the three -NCO groups comprised in the polyisocyanate, and the -OH group comprised in the diol or polyol reacts with another one of the three -NCO groups comprised in the polyisocyanate. When n in the formula (I) is 2 or 3, the polymerizable ultraviolet absorber can be obtained by reacting plural UV absorbers having a reactive hydrogen group with plural polyisocyanate having three -NCO groups and plural diol or polyol, wherein the reactive hydrogen group reacts with one of the three -NCO groups comprised in the polyisocyanate, and the -OH group comprised in the diol or polyol reacts with another one of the three -NCO groups comprised in the polyisocyanate.

The molecular weight of the polymerizable ultraviolet absorber of the present disclosure is significantly greater than the molecular weight of the small molecule UV absorber which is conventionally used to solve the yellowing problem of polyurethane. Since the polymerizable ultraviolet absorber of the present disclosure have larger molecular weight and the -NCO group(s) is capable of reacting with the monomer, the oligomer or the polymer for preparing the polyurethane, the polymerizable ultraviolet absorber of the present disclosure can be used as an additive and participate in the reaction for preparing the polyurethane. Hence, the polymerizable ultraviolet absorber of the present disclosure can solve the yellowing problem of the polyurethane, and also can solve the migration of the small molecule UV absorber caused by high temperature or contacting organic solvents (especially, the oil phase) for a long time.

In the present disclosure, a weight average molecular weight of the polymerizable ultraviolet absorber can be less than 5,000, and preferably is ranged from 1,100 to 2,500.

In the present disclosure, the UV absorber is not particularly limited, as long as it has a reactive hydrogen group. The reactive hydrogen group as a functional group can be selected from the group consisting of -OH, -NH₂ and -NH-. More specifically, the UV absorber can be selected from the group consisting of: a benzotriazole UV absorber, a benzophenone UV absorber, a triazine UV absorber, an oxanilide UV absorber and a cyanoacrylate UV absorber. In one aspect of the present disclosure, the UV absorber is a benzotriazole UV absorber.

In the present disclosure, the polyisocyanate may have three -NCO groups. When the UV absorber reacts with the polyisocyanate, the reactive hydrogen group comprised in the UV absorber can bond to one of the three -NCO groups comprised in the polyisocyanate. The rest two -NCO groups comprised in the polyisocyanate can participate the process for preparing the polyurethane and prevent the end of the polymerization, wherein polyurethane with desirable molecular weight cannot be obtained due to the end of the polymerization. In the present disclosure, the polyisocyanate can be selected from the group consisting of: hexamethylene diisocyanate trimer (HDI TRIMER), hexamethylene diisocyanate biuret (HDB) and a mixture thereof. In one aspect of the present disclosure, the polyisocyanate is HDI TRIMER or HDB.

In the present disclosure, the diol or the polyol may have two or more -OH groups. Hence, when the diol or the polyol reacts with polyisocyanate, the -OH group comprised in the diol or the polyol can bond to the -NCO group comprised in the polyisocyanate. Herein, the diol or the polyol can be selected from the group consisting of an anionic diol, an anionic polyol, a cationic diol, a cationic polyol, a nonionic diol, a nonionic polyol, and a mixture thereof. More specifically, the anionic diol or the anionic polyol can be selected from the group consisting of: 2,2-bis(hydroxymethyl)butyric acid (DMBA), 2,2-bis(hydroxymethyl)propionic acid (DMPA), 1,4-butanediol-2-sodium or a mixture thereof. The cationic diol or the cationic polyol can be selected from the group consisting of N-methyldiethanolamine (MDEA), triethanolamine or a mixture thereof. The nonionic diol can be selected from the group consisting of ethylene glycol (EG), propylene glycol (PG), butylene glycol (BD), hexalene glycol (HD), diethylene glycol (DEG), dipropylene glycol (DPG), neopentyl glycol (NPG) and a mixture thereof. The nonionic polyol can be a nonionic polyether polyol or a nonionic polyester polyol, wherein the nonionic polyether polyol can be selected from the group consisting of polytetramethylene ether glycol (PTMEG), polyethylene glycol (PEG), polypropylene glycol (PPG) and a copolymer thereof, the nonionic polyester polyol can be a polyol formed by an esterification-polymerization of a diacid and a diol, the diacid can be selected from the group consisting of adipic acid (AA), sebacic acid (SA), terephthalate acid (TPA), isophthalic acid (IPA), phthalic anhydride (PA) and a mixture thereof, and the diol can be selected from the group consisting of EG, PG, BD, HD, DEG, DPG, NPG and a mixture thereof. In one embodiment of the present disclosure, the diol or the polyol is polyethylene glycol (PEG).

In addition, the present disclosure further provides a composition for forming polyurethane, which comprises: a monomer, an oligomer or a polymer containing at least two -NCO groups; and the aforesaid polymerizable ultraviolet absorber. Herein, the content of the polymerizable ultraviolet absorber is not particularly limited, as long as the addition of the polymerizable ultraviolet absorber can solve the yellowing problem of the polyurethane. In one embodiment of the present disclosure, a content of the polymerizable ultraviolet absorber is ranged from 1 wt% to 30 wt% based on a total weight of the composition. In another embodiment of the present disclosure, a content of the polymerizable ultraviolet absorber is ranged from 1 wt% to 20 wt% based on a total weight of the composition.

In the present disclosure, the type of the polyurethane is not particularly limited, and can be, for example, reactive polyurethane or thermoplastic polyurethane.

Other objects, advantages, and novel features of the disclosure will become more apparent from the following detailed description when taken in conjunction with the accompanying drawings.

### BRIEF DESCRIPTION OF THE DRAWINGS

FIG. 1 is a diagram showing the relation between the UVA effective amount and the anti-yellowing level when different ultraviolet absorbers were added into reactive polyurethane.
FIG. 2 is a diagram showing the relation between the UVA effective amount and the anti-yellowing level when different ultraviolet absorbers were added into thermoplastic polyurethane.
FIG. 3 is a diagram showing the relation between the UVA effective amount and the anti-yellowing level when different amounts of ultraviolet absorbers were added into thermoplastic polyurethane.

### DETAILED DESCRIPTION OF THE EMBODIMENT

The following embodiments when read with the accompanying drawings are made to clearly exhibit the above-mentioned and other technical contents, features and/or effects of the present disclosure. Through the exposition by means of the specific embodiments, people would further understand the technical means and effects the present disclosure adopts to achieve the above-indicated objectives. Moreover, as the contents disclosed herein should be readily understood and can be implemented by a person skilled in the art, all equivalent changes or modifications which do not depart from the concept of the present disclosure should be encompassed by the appended claims.

Unless specified otherwise, singular words "a" and "the" used in the present specification and claims include one or plural objects.

Unless specified otherwise, term "or" used in the present specification and claims include meaning of and/or.

The term "weight average molecular weight" here is a Mw value of an object measured by using gel permeation chromatography (GPC) with tetrahydrofuran (THF) as a solvent, and using Mw value of polystyrene as a standard.

The methods of preparation are described by the following embodiments in details, and the similar methods of embodiments can be used to prepare said polymerizable ultraviolet absorber. The methods of preparing polymerizable ultraviolet absorber (such as synthetical method, reaction condition, and sequences) and the used materials are not limited to the present disclosure.

The present disclosure is explained by the following embodiments, which are not used to limit the scope of the present disclosure. Unless specified otherwise, "%" used herein for indicating the amount of the contents or the objects in the following embodiments are weight percentage.

### Preparation of Compound 1

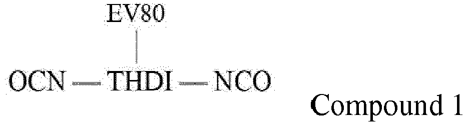

620 g of α-[3-[3-(2H-Benzotriazol-2-yl)-5-(1,1-dimethylethyl)-4-hydroxyphenyl]-1-oxopropyl]-ω-hydroxypoly(oxo-1,2-ethanediyl) (Eversorb 80 (EV80), Everlight Chemical Industrial Corporation) was placed in a flask, and water was removed using a vacuum system. After the temperature was reduced to 60°C, 504.6 g of THDI (HDI trimer, CORONA HX; TOSOH) was added into the flask, the temperature was increased to 70 ∼ 75°C at a nitrogen atmosphere to perform the reaction. When the NCO groups were titrated till the end of the reaction (free NCO% = 6.53 ± 0.65 %), the reaction was completed and Compound 1 was obtained.

### Preparation of Compound 2

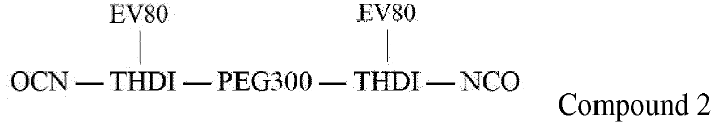

620 g of EV80 and 150 g of PEG-300 (ORIENTAL UNION CHEMICAL CO.) were respectively placed into two flasks, and water was removed using a vacuum system. After the temperature was reduced to 60°C, 504.6 g of THDI (CORONA HX; TOSOH) was added into the flask containing EV80, the temperature was increased to 70 ∼ 75°C at a nitrogen atmosphere to perform the reaction. When the NCO groups were titrated till free NCO% was around 6.53 %, PEG-300 was further added therein to perform the reaction. When the NCO groups were titrated till the end of the reaction (free NCO% = 3.76 ± 0.37 %), the reaction was completed and Compound 2 was obtained.

### Preparation of Compound 3

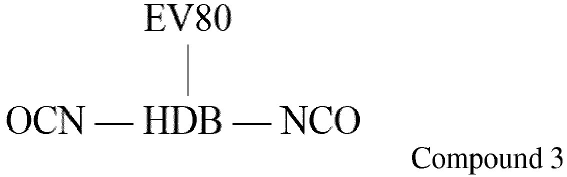

620 g of EV80 was placed in a flask, and water was removed using a vacuum system. After the temperature was reduced to 60°C, 423.4 g of Hexamethylene diisocyanate biuret (HDB-100; AN FONG) was added into the flask, the temperature was increased to 70 ∼ 75°C at a nitrogen atmosphere to perform the reaction. When the NCO groups were titrated till the end of the reaction (free NCO% = 6.53 ± 0.65 %), the reaction was completed and Compound 3 was obtained.

### Preparation of reactive polyurethane (PUR)

700 g of polyol including 200 g of DAHINOL P-213 (ZAND SHIN POLYMER Co.) and 500 of AR-U2010B1(YONG SHUN CHEMICAL Co.) were mixed and placed in a flask, and water was removed using a vacuum system after mixing well. Next, 300 g of isocyanate including 50 g of Desmodur® 44M (covestro) and 250 g of TAKENATE™ D-110N (Mitsui Chemicals) was added therein, and the temperature was increased to 60 ∼ 85°C at a nitrogen atmosphere to perform the reaction. When the NCO groups were titrated till the end of the reaction (free NCO% = 3.6 ± 0.4 %), the reaction was completed. Finally, Compound 1, Compound 2 or Compound 3 was added therein and mixed well to obtain the product.

Herein, the obtained PUR was irradiated by UV light and analyzed with chromatic aberration analysis to evaluate the anti-yellowing effect thereof. The irradiation condition of the UV light was: UVA-340 nm, 60°C, 0.89 W/m²/nm and 20 hours. In addition, the obtained PUR was also analyzed with migration test, wherein the obtained PUR was immersed in toluene, ultra-sonication was performed thereon for 1 hour, and then UV light irradiation and chromatic aberration analysis were performed by the same method illustrated above to evaluate the anti-yellowing effect thereof.

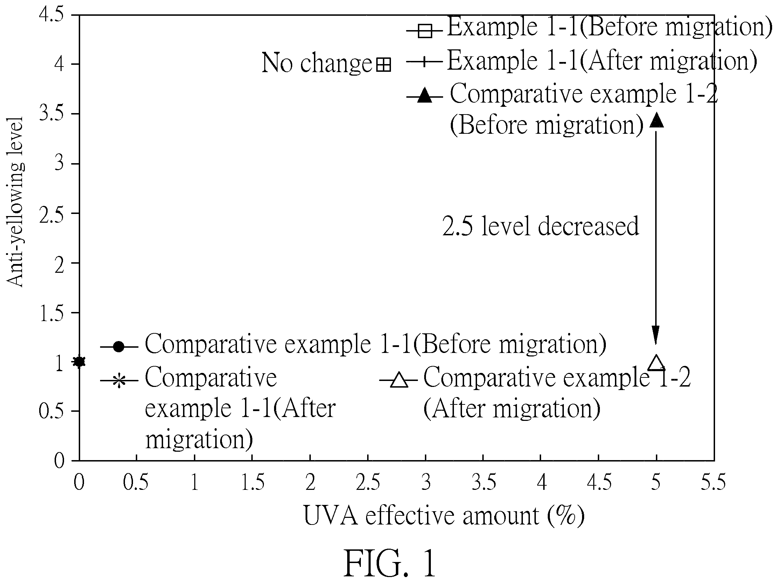

The results of the migration test and the anti-yellowing evaluation are shown in the following Table 1 and FIG. 1. FIG. 1 shows the evaluation results of Comparative example 1-1, Comparative example 1-2 and Example 1-1 with Compound 1.

**Table 1**

| | Comparative example 1-1 | Comparative example 1-2 | Example 1-1 | Example 1-2 | Example 1-3 | Example 1-4 |
|---|---|---|---|---|---|---|
| Amount of Tinuvin 384 (wt %) | 0 | 5 | --- | --- | --- | --- |
| Amount of Compound 1 (wt %) | 0 | --- | 5 | 20 | --- | --- |
| Amount of Compound 2 (wt %) | 0 | --- | --- | --- | 20 | --- |
| Amount of Compound 3 (wt %) | 0 | --- | --- | --- | --- | 5 |
| UVA effective amount (%) | 0 | 5 | 2.65 | 10.60 | 9.11 | 2.65 |
| ΔE | 22.01 | 2.72 | 1.56 | 0.48 | 0.32 | 0.64 |
| Level | 1 | 3-4 | 4 | 4-5 | 4-5 | 4-5 |

| Migration Test | | | | | | |
|---|---|---|---|---|---|---|
| ΔE | 14.16 | 12.36 | 1.62 | --- | --- | 1.33 |
| Level | 1 | 1 | 4 | --- | --- | 4 |

### Preparation of thermoplastic polyurethane (TPU)

2000 g of polyol (TERATHANE® 2000 (INVISTA)) and 4.5 g of chain extender (1,4-Butanediol) were mixed and placed in a flask, 125 g of isocyanate (Desmodur® 44M (covestro)) was placed in another flask, and water in these two flasks was removed using a vacuum system after mixing well. After water removing, nitrogen was introduced therein, an ice water bath was prepared, and the flasks were placed adjacent to a mixing apparatus to perform the reaction. First, the polyol and the chain extender were added. Then, Desmodur® 44M was added by three times in the ice water bath, and Compound 2 was added toghether with Desmodur® 44M in the first time and second time of adding Desmodur® 44M. The sample was placed in a container to perform a post backing, and then placed in 60°C oven overnight to obtain TPU block.

The obtaine TPU block was crushed, melted, and injection molded to obtain a TPU specimen.

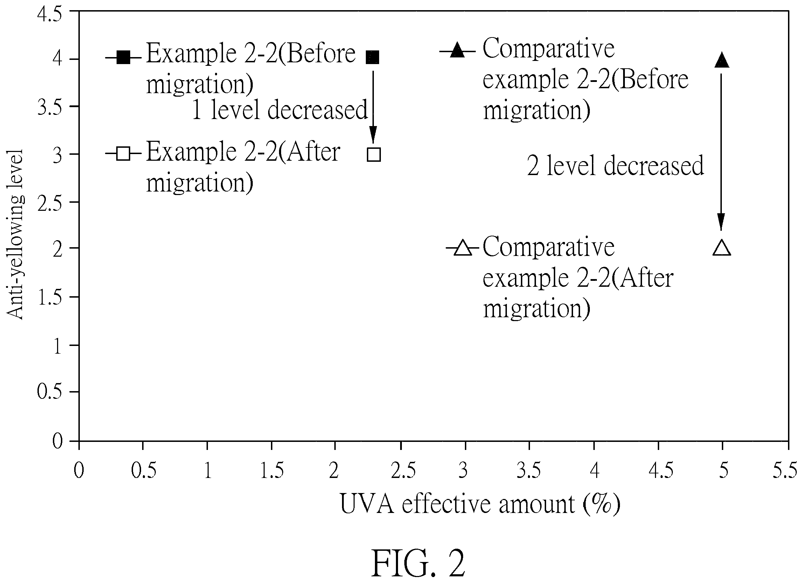

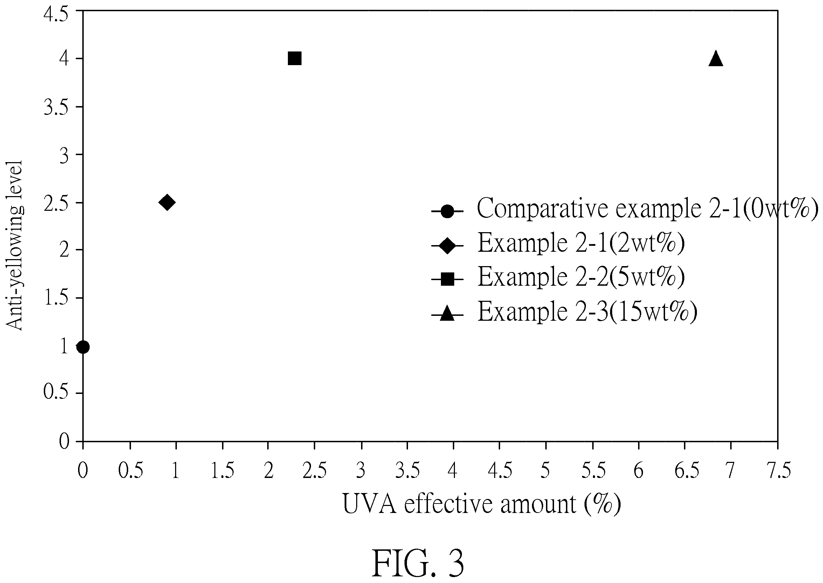

Herein, the UV light irradiation, chromatic aberration analysis and migration test were performed by the same method illustrated above. The results of the migration test and the anti-yellowing evaluation are shown in the following Table 2, FIG. 2 and FIG. 3. FIG. 2 shows the evaluation results of Comparative example 2-2 and Example 2-2 with Compound 2.

**Table 2**

| | Comparative example 2-1 | Comparative example 2-2 | Example 2-1 | Example 2-2 | Example 2-3 |
|---|---|---|---|---|---|
| Amount of Tinuvin 384 (wt %) | 0 | 5 | --- | --- | --- |
| Amount of Compound 2 (wt %) | 0 | --- | 2 | 5 | 15 |
| UVA effective amount (%) | 0 | 5 | 0.91 | 2.28 | 6.84 |
| ΔE | 12.41 | 1.49 | 4.16 | 1.83 | 1.36 |
| Level | 1 | 4 | 2-3 | 4 | 4 |

| Migration Test | | | | | |
|---|---|---|---|---|---|
| ΔE | 12.66 | 7.81 | --- | 3.59 | --- |
| Level | 1 | 2 | --- | 3 | --- |

In Table 1 and Table 2, the used Tinuvin 384 in Comparative examples 1-2 and 2-2 has the following structure.

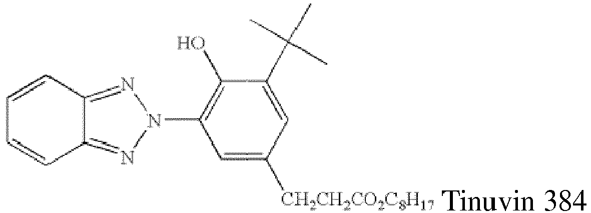

As shown in Table 1, Table 2 and FIGs. 1 to 3, from the results of the UV light irradiation and chromatic aberration analysis, when 5 wt% of Compound 1, Compound 2 or Compound 3 (polymerizable ultraviolet absorber) or 5 wt% of small molecular UVA (Tinuvin 384) were added into PUR or TPU, the anti-yellowing levels of PUR or TPU can be effectively incrased to 3.5 or more. From the results of migration test, after immersing in a solvent and ultra-sonication, the PUR or TPU added with 5 wt% of Compound 1, Compound 2 or Compound 3 (polymerizable ultraviolet absorber) has anti-yellowing levels of 3 or more, but the PUR or TPU added with 5 wt% of small molecular UVA has anti-yellowing levels of 2 or less. The above results indicate that when the polymerizable ultraviolet absorber was added into PUR or TPU, the anti-yellowing of PUR or TPU can be significantly improved. In addition, the polymerizable ultraviolet absorber of the present disclosure further has low migration.

The polymerizable ultraviolet absorber of the present disclosure not only can be applied to the aforesaid PUR or TPU, and also can be used in other polyurethane, for example, polyurethane foam. In addition, the application fields of the polymerizable ultraviolet absorber of the present disclosure are not particularly limited, and can be applied to resins for coating, adhesion, sealing or elastomer or other fields using polyurethane.

Although the present disclosure has been explained in relation to its preferred embodiment, it is to be understood that many other possible modifications and variations can be made without departing from the spirit and scope of the disclosure as hereinafter claimed.

## Claims

1. A use of a polymerizable ultraviolet absorber, which is applied to a process for preparing polyurethane, wherein the polymerizable ultraviolet absorber is obtained by reacting an UV absorber having a reactive hydrogen group with a polyisocyanate having three -NCO groups.

2. The use according to claim 1, wherein a weight average molecular weight of the polymerizable ultraviolet absorber is less than 5,000.

3. The use according to claim 1 or 2, wherein the reactive hydrogen group as a functional group comprised in the UV absorber is selected from the group consisting of -OH, -NH₂ and -NH-.

4. The use according to any of the previous claims, wherein the UV absorber is selected from the group consisting of: a benzotriazole UV absorber, a benzophenone UV absorber, a triazine UV absorber, an oxanilide UV absorber and a cyanoacrylate UV absorber,

5. The use according to any of the previous claims, wherein the polyisocyanate is selected from the group consisting of: hexamethylene diisocyanate trimer (HDI TRIMER), hexamethylene diisocyanate biuret (HDB) and a mixture thereof.

6. The use according to any of the previous claims, wherein the polymerizable ultraviolet absorber is obtained by reacting the UV absorber having the reactive hydrogen group with the polyisocyanate having the three -NCO groups and a diol or a polyol.

7. The use according to claim 6, wherein the diol or the polyol is selected from the group consisting of :
an anionic diol or an anionic polyol, wherein the anionic diol or the anionic polyol can be selected from the group consisting of: 2,2-bis(hydroxymethyl)butyric acid (DMBA), 2,2-bis(hydroxymethyl)propionic acid (DMPA), 1,4-butanediol-2-sodium or a mixture thereof;
a cationic diol or a cationic polyol, wherein the cationic diol or the cationic polyol can be selected from the group consisting of N-methyldiethanolamine (MDEA), triethanolamine or a mixture thereof.
a nonionic diol, wherein the nonionic diol can be selected from the group consisting of ethylene glycol (EG), propylene glycol (PG), butylene glycol (BD), hexalene glycol (HD), diethylene glycol (DEG), dipropylene glycol (DPG), neopentyl glycol (NPG) and a mixture thereof;
a nonionic polyol, wherein the nonionic polyol can be a nonionic polyether polyol or a nonionic polyester polyol, wherein the nonionic polyether polyol can be selected from the group consisting of polytetramethylene ether glycol (PTMEG), polyethylene glycol (PEG), polypropylene glycol (PPG) and a copolymer thereof, wherein the nonionic polyester polyol can be a polyol formed by an esterification-polymerization of a diacid and a diol, wherein the diacid can be selected from the group consisting of adipic acid (AA), sebacic acid (SA), terephthalate acid (TPA), isophthalic acid (IPA), phthalic anhydride (PA) and a mixture thereof, and wherein the diol can be selected from the group consisting of EG, PG, BD, HD, DEG, DPG, NPG and a mixture thereof;
and a mixture thereof.

8. The use according to any of the previous claims, wherein the polyurethane is reactive polyurethane or thermoplastic polyurethane.

9. A composition for forming polyurethane, comprising:
a monomer, an oligomer or a polymer containing at least two -NCO groups; and
a polymerizable ultraviolet absorber, which is obtained by reacting an UV absorber having a reactive hydrogen group with a polyisocyanate having three -NCO groups.

10. The composition of claim 9, wherein a content of the polymerizable ultraviolet absorber is ranged from 1 wt% to 30 wt% based on a total weight of the composition; and/or
wherein a weight average molecular weight of the polymerizable ultraviolet absorber is less than 5,000.

11. The composition according to claim 9 or 10, wherein the reactive hydrogen group as a functional group comprised in the UV absorber is selected from the group consisting of -OH, -NH₂ and -NH-.

12. The composition according to any of the claims 9 to 11, wherein the UV absorber is selected from the group consisting of: a benzotriazole UV absorber, a benzophenone UV absorber, a triazine UV absorber, an oxanilide UV absorber and a cyanoacrylate UV absorber.

13. The composition according to any of the claims 9 to 12, wherein the polyisocyanate is selected from the group consisting of: HDI TRIMER, HDB or a mixture thereof.

14. The composition according to any of the claims 9 to 13, wherein the polymerizable ultraviolet absorber is obtained by reacting the UV absorber having the reactive hydrogen group with the polyisocyanate having the three -NCO groups and a diol or a polyol.

15. The composition according to claim 14, wherein the diol or the polyol is selected from the group consisting of
an anionic diol or an anionic polyol wherein the anionic diol or the anionic polyol can be selected from the group consisting of: DMBA, DMPA, 1,4-butanediol-2-sodium or a mixture thereof;
a cationic diol or a cationic polyol, wherein the cationic diol or the cationic polyol can be selected from the group consisting of MDEA, triethanolamine or a mixture thereof;
a nonionic diol, wherein the nonionic diol can be selected from the group consisting of EG, PG, BD, HD, DEG DPG, NPG and a mixture thereof;
a nonionic polyol, wherein the nonionic polyol can be a nonionic polyether polyol or a nonionic polyester polyol, wherein the nonionic polyether polyol can be selected from the group consisting of PTMEG, PEG, PPG and a copolymer thereof, wherein the nonionic polyester polyol can be a polyol formed by an esterification- polymerization of a diacid and a diol, wherein the diacid can be selected from the group consisting of AA, SA, TPA, IPA, PA or a mixture thereof, and wherein the diol can be selected from the group consisting of EG, PG, BD, HD, DEG, DPG, NPG and a mixture thereof;
and a mixture thereof.
